# EUROPEAN PATENT APPLICATION

(11) **EP 4 324 537 A1**
(43) Date of publication of application: **21.02.2024**
(21) Application number: 23186473.7
(22) Date of filing: 19.07.2023

(54) **APPARATUS AND METHOD FOR GAS SEPARATION FROM AIR**

(30) Priority: 20.07.2022 GB 202210597
(71) Applicant: Peak Scientific Instruments Limited, Inchinnan Renfrew PA4 9RE (GB)
(72) Inventor: Campbell, Kevin, deceased (GB)
(74) Representative: Lawrie IP Limited

(57) **Abstract**

A gas generation apparatus comprising an air intake unit, a compressor unit which draws atmospheric air through the air intake unit and into the compressor unit, a cooling unit which cools the compressed air, a filter unit which filters the cooled air, a gas separator which separates the filtered air, a separated gas outlet which receives the separated gas, and a heat exchange apparatus comprising a body portion having a first fluid inlet and outlet, a second fluid inlet and outlet, a first fluid conduit between the first fluid inlet and outlet, and a second fluid conduit between the second fluid inlet and outlet. The heat exchange apparatus allows heat to be exchanged between conduits, and is arranged to receive compressed atmospheric air at the first fluid inlet and supply it from the first fluid outlet to the cooling unit, and receive filtered air at the second fluid inlet and supply it from the second fluid outlet to the gas separator.

## Description

The present invention relates to a gas generation apparatus, gas processing apparatus, a heat exchange apparatus, and methods of operating the same.

Gas processing and generation apparatuses including air intake units, compressor units, air filter units, water drain systems and gas storage tanks are known. While such apparatuses are capable of processing and generating filtered atmospheric air, they are susceptible to problems with gas purity and malfunction.

The present inventors have appreciated the shortcomings in the above-described apparatus and systems.

According to a first aspect of the present invention there is provided a heat exchange apparatus comprising:
a body portion having:
   a first fluid inlet
   a first fluid outlet;
   a second fluid inlet;
   a second fluid outlet;
   a first fluid conduit arranged between the first fluid inlet and
the first fluid outlet; and
   a second fluid conduit arranged between the second fluid inlet and the second fluid outlet,
wherein the first fluid conduit and the second fluid conduit are arranged to allow heat to be exchanged between each conduit.

The heat exchange apparatus may be a thermal heat exchange apparatus. The heat exchange apparatus may be configured to transfer thermal energy between each conduit. The heat exchange apparatus may be configured to transfer thermal energy between fluids in each conduit. The heat exchange apparatus may be configured to transfer thermal energy between two fluids. The heat exchange apparatus may be for transferring heat between two fluids.

The heat exchange apparatus may be for a gas generation apparatus, or gas generator.

The heat exchange apparatus may be arranged to transfer fluid from the first fluid inlet to the first fluid outlet. The heat exchange apparatus may be arranged to transfer fluid from the first fluid inlet to the first fluid outlet via the first fluid conduit. The heat exchange apparatus may be arranged to transfer fluid from the second fluid inlet to the second fluid outlet. The heat exchange apparatus may be arranged to transfer fluid from the second fluid inlet to the second fluid outlet via the second fluid conduit.

The fluid may be gas. The fluid may be water. The fluid may be a water/gas mixture. The fluid may be gas with water vapour. The gas may be gas generated by a gas generation apparatus. The gas may be atmospheric air. The gas may be compressed atmospheric air. The gas may be filtered gas. The gas may be compressed filtered gas. The gas may be compressed and filtered atmospheric air.

The body portion may be arranged to allow fluid to flow between the first fluid inlet and the first fluid outlet. The body portion may be arranged to allow fluid to flow between the second fluid inlet and the second fluid outlet. In use, fluid may flow through the body portion between the first fluid inlet and the first fluid outlet. In use, fluid may flow through the body portion between the second fluid inlet and the second fluid outlet.

The body portion may be arranged to allow fluid to flow between the first fluid inlet and the first fluid outlet, and between the second fluid inlet and the second fluid outlet. In use, fluid may flow through the body portion between the first fluid inlet and the first fluid outlet, and between the second fluid inlet and the second fluid outlet.

The body portion may be arranged to allow fluid to flow between the first fluid inlet and the first fluid outlet through the first fluid conduit, and between the second fluid inlet and the second fluid outlet through the second fluid conduit. In use, fluid may flow through the body portion between the first fluid inlet and the first fluid outlet via the first fluid conduit, and between the second fluid inlet and the second fluid outlet via the second fluid conduit.

The body portion may include a longitudinal axis. The longitudinal axis may extend between side portions of the body portion. The longitudinal axis may extend between left and right side portions of the body portion. The body portion may include a lateral axis. The lateral axis may extend between a top side and a bottom side of the body portion.

The first fluid inlet may be located on a side portion of the body portion. The first fluid outlet may be located on a side portion of the body portion. The first fluid inlet may be located on a bottom side of the body portion. The first fluid outlet may be located on a bottom side of the body portion. The first fluid inlet may be located at an opposite end of the body portion than the first fluid outlet. The first fluid inlet may be located on a left side of the body portion, and the first fluid outlet may be located on a right side of the body portion. The first fluid inlet and first fluid outlet may be located on a side wall portion of the body portion.

The second fluid inlet may be located on a side portion of the body portion. The second fluid outlet may be located on a side portion of the body portion. The second fluid inlet may be located on a right side of the body portion. The second fluid outlet may be located on a left side of the body portion. The second fluid inlet may be located on a right side of the body portion, and the second fluid outlet may be located on a left side of the body portion.

The first fluid inlet and first fluid outlet may be configured to be substantially parallel to the lateral axis of the body portion. The first fluid inlet and first fluid outlet may be located on the same side of the body portion. The first fluid inlet and first fluid outlet may be located on the same side of a bottom portion the body portion.

The second fluid inlet and second fluid outlet may be configured to be substantially parallel to the longitudinal axis of the body portion. The second fluid inlet and second fluid outlet may be located on opposite sides of the body portion.

The body portion may be cylindrical. The body portion may be generally cylindrical in shape. The body portion may be a cylinder.

The body portion may include a first member and a second member. The first member may be a hollow cylindrical member. The second member may be a hollow cylindrical member. The first member may be an outer hollow cylindrical member. The second member may be an inner hollow cylindrical member. The first member may house the second member.

The second member may be located within the first member. The first member may house the second member therein.

The first member of the body portion may be cylindrical. The first member of the body portion may be generally cylindrical in shape. The first member of the body portion may be a cylinder.

The second member of the body portion may be cylindrical. The second member of the body portion may be generally cylindrical in shape. The second member of the body portion may be a cylinder.

The second member of the body portion may have a smaller diameter to that or the first member of the body portion.

The first and second members of the body portion may be arranged to be coaxial.

Each member of the body portion may be arranged in the direction of the longitudinal axis of the body portion.

Each member of the body portion may have a longitudinal axis. Each member of the body portion may be arranged such that their longitudinal axes are substantially parallel to one another. The first and second members may be arranged such that their longitudinal axes coincide. The first and second members may be arranged such that they are collinear.

The first and second body member may be arranged such that the second member is spaced from the first member. That is, the second member is spaced from the first member within the first member. That is, the second member is spaced from the first member within the first member to create a void, or volume, between the first member and the second member.

The first member of the body portion may have an outer wall portion and an inner wall portion. The second member of the body portion may have an outer wall portion and an inner wall portion.

The second member may be arranged with the first member such that it is spaced from the inner wall of the first member. That is, an annular cylindrical void exists between the inner wall portion of the first member and the outer wall portion of the second member.

The first and second body member may be arranged such that the second member is spaced from the first member within the first member.

The body portion may be arranged such that an annular cylindrical void exists between the first member and the second member. The body portion may be arranged such that a volume exists between the first member and the second member. The volume may be in the shape of an annular cylinder. The body portion may be arranged such that a void exists between the first member and the second member. The void may be in the shape of an annular cylinder.

The body portion may include end plates. Each end plate being located at either end of the body portion. The second fluid inlet may be associated with a first end plate, and the second fluid outlet may be associated with a second end plate.

The volume, or void, between the first and second members of the body portion may define the first fluid conduit of the body portion. The first fluid conduit of the body portion may be the volume, or void, between the first and second members of the body portion. The first fluid conduit may be in the shape of an annular cylinder.

The first fluid inlet and the first fluid outlet may be in fluidic communication with the volume, or void, between the first and second members of the body portion.

The first fluid inlet may be in fluidic communication with the first fluid conduit at a first end of the body portion, and the first fluid outlet may be in fluidic communication with the first fluid conduit at a second opposite end of the body portion.

The second fluid inlet and the second fluid outlet may be in fluidic communication with the second member of the body portion.

The second member of the body portion may be a hollow cylinder. The second member of the body portion may define the second fluid conduit of the body portion. That is, the second fluid conduit of the body portion is a hollow cylinder that extends between the second fluid inlet and the second fluid outlet. The second fluid conduit of the body portion may be aligned with the longitudinal axis of the body portion of the apparatus.

The second fluid inlet may be in fluidic communication with the second fluid conduit at a first end of the body portion, and the second fluid outlet may be in fluidic communication with the second fluid conduit at a second opposite end of the body portion.

The first fluid inlet and the second fluid outlet may be located at one end of the body portion, and the second fluid inlet and the first fluid outlet may be located at an opposite end of the body portion.

In use of the heat exchange apparatus, fluid flowing in the first fluid conduit may flow in an opposite direction to fluid flowing in the second fluid conduit.

The fluid inlets and fluid outlets may include fittings. The fittings may be 1/4" BSPP (British Standard Pipe Parallel) fittings. However, it should be appreciated that other fittings may be used.

The first fluid conduit may have a volume of between 60ml and 70ml. However, it should be appreciated that other suitable sizes and volumes may be used.

The second fluid conduit may have a volume of between 10ml and 20ml. However, it should be appreciated that other suitable sizes and volumes may be used.

The heat exchange apparatus may be configured to allow heat to be transferred from fluid in the first fluid conduit to fluid in the second fluid conduit.

The first fluid conduit may substantially surround the second fluid conduit.

The first fluid conduit and the second fluid conduit may be arranged to allow heat to be exchanged between the two. The first fluid conduit and the second fluid conduit may be arranged to allow heat to be exchanged between fluids in each conduit. The first fluid conduit and the second fluid conduit may be arranged to allow heat to be exchanged between each conduit. The first fluid conduit and the second fluid conduit may be arranged to allow heat to be exchanged therebetween. The first fluid conduit and the second fluid conduit may be arranged to allow heat to be transferred between each conduit.

According to a second aspect of the present invention there is provided a gas generation apparatus comprising:
an air intake unit;
a compressor unit, the compressor unit being operable to draw atmospheric air through the air intake unit and into the compressor unit;
a cooling unit, the cooling unit being configured to cool the compressed atmospheric air from the compressor unit;
a filter unit, the filter unit being configured to filter the compressed atmospheric air from the cooling unit;
a gas separator, the gas separator being configured to separate the compressed atmospheric air from the filter unit;
a separated gas outlet, the separated gas outlet being configured to receive the separated compressed gas from the gas separator; and
a heat exchange apparatus comprising:
   a body portion having:
   a first fluid inlet
   a first fluid outlet;
   a second fluid inlet;
   a second fluid outlet;
   a first fluid conduit arranged between the first fluid inlet and the first fluid outlet; and
   a second fluid conduit arranged between the second fluid inlet and the second fluid outlet,
   wherein the first fluid conduit and the second fluid conduit are arranged to allow heat to be exchanged between each conduit, and
   wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator.

The heat exchange apparatus may be arranged to receive compressed atmospheric air from the compressor unit at the first fluid inlet and supply cooled compressed atmospheric air from the first fluid outlet to the cooling unit, and receive filtered compressed atmospheric air from the filter unit at the second fluid inlet and supply heated filtered compressed atmospheric air from the second fluid outlet to the gas separator.

The heat exchange apparatus may be located between the compressor unit and the cooling unit, and the filter unit and the gas separator.

The heat exchange apparatus may be configured such that compressed atmospheric air from the compressor unit may pass through the first fluid conduit of the body portion. The heat exchange apparatus may be configured such that compressed atmospheric air from the compressor unit may pass through the first fluid conduit of the body portion via the first fluid inlet and first fluid outlet.

The heat exchange apparatus may be configured such that compressed atmospheric air from the filter unit may pass through the second fluid conduit of the body portion. The heat exchange apparatus may be configured such that compressed atmospheric air from the filter unit may pass through the second fluid conduit of the body portion via the second fluid inlet and the second fluid outlet.

The heat exchange apparatus may be configured such that compressed atmospheric air from the compressor unit may pass through the first fluid conduit of the body portion, and compressed atmospheric air from the filter unit may pass through the second fluid conduit of the body portion. The heat exchange apparatus may be configured such that compressed atmospheric air from the compressor unit may pass through the first fluid conduit of the body portion via the first fluid inlet and first fluid outlet, and compressed atmospheric air from the filter unit may pass through the second fluid conduit of the body portion via the second fluid inlet and second fluid outlet.

The filter unit may be a fluid filter unit. The filter unit may be a vapour filter unit. The filter unit may be a fluid and vapour filter unit. The filter unit may be a fluid, vapour and particulate filter unit. The filter unit may be configured to remove fluid, vapour or particulates from the compressed atmospheric air from the compressor unit. The filter unit may be configured to remove moisture, coarse particulates and fine particulates from the compressed atmospheric air from the compressor unit.

The filter unit may include two or more filter components. Each filter component may include a predetermined filter characteristic. The filter unit may include three filter components. Each filter component may include a predetermined filter characteristic. The filter unit may include a plurality of filter components. Each filter component may include a predetermined filter characteristic.

The filter unit may include a first filter component. The filter component may be configured to filter fluid from the compressed atmospheric air. The filter component may be configured to filter fluid, vapour and particulates from the compressed atmospheric air. The filter unit component may be configured to filter fluid in the form of liquid and/or vapour from the compressed atmospheric air.

The filter unit may include a second filter component. The second filter component may be configured to filter coarse particulates from the compressed atmospheric air. The coarse particulates may be mist or vapour.

The filter unit may include a third filter component. The third filter component may be configured to filter fine particulates from the compressed atmospheric air. Fine particulates may be any material or substance larger than 0.1 Micron.

The gas separator may be an air filter unit.

The gas separator of the gas generation apparatus may be configured to filter, or separate, the compressed atmospheric air from the filter unit into at least one of its constituent gas components. That is, the gas separator of the gas generation apparatus may be configured to filter, or separate, out substantially all but one of the gas components of the atmospheric air. The gas separator of the gas generation apparatus may therefore be operable to selectively filter, or separate, out four out of the five main gases present in atmospheric air. The remaining gas present after passing the compressed atmospheric air through the gas separator of the gas generation apparatus may therefore be nitrogen, oxygen, argon or carbon dioxide.

The gas separator of the gas generation apparatus may be a membrane filter. The gas separator of the gas generation apparatus may be a molecular sieve filter. The gas separator of the gas generation apparatus may be a carbon molecular sieve filter. The gas separator of the gas generation apparatus may be a mol sieve filter. The gas separator of the gas generation apparatus may be a dryer membrane filter. The gas separator of the gas generation apparatus may be a hollow fibre membrane filter. The gas separator of the gas generation apparatus may be a catalytic reactor. The gas separator may be a hydrocarbon molecular sieve. The gas separator may be a membrane. The gas separator may be a pressure swing adsorption (PSA) apparatus. The gas separator may be a vacuum pressure swing adsorption (VPSA) apparatus. The gas separator may be a catalytic reaction apparatus. The gas separator may be a thermal swing adsorption (TSA) apparatus. The gas separator may be an electrolysis apparatus. The gas separator may be a fractional distillation apparatus. The gas separator may be a chemical reaction apparatus.

The apparatus may further comprise a gas storage tank. The gas storage tank may be configured to receive and store the separated compressed gas from the gas separator.

The gas storage tank may be connectable to the separated gas outlet (output circuit).

The gas generation apparatus may comprise two or more compressor units. Each compressor unit may draw atmospheric air through the air intake unit. Alternatively, the gas generation apparatus may include two or more air intake units, and each compressor may operate with its own air intake unit. In this arrangement, each compressor unit includes its own filter unit, heat exchange apparatus, and gas separator. Each gas separator may be configured to filter a different constituent gas component from the atmospheric air. Each gas separator may be configured to filter the same constituent gas component from the atmospheric air. Alternatively, each compressor unit includes only its own heat exchange apparatus, and the output from each compressor unit is fed to the filter unit. The output from the filter unit may be provided to each heat exchange apparatus, and the output from each heat exchange apparatus may be provided to the gas separator.

The gas generation apparatus may include two or more compressor units, each compressor unit being configured to operate with a cooling unit, a filter unit, a heat exchange apparatus, and a gas separator. The gas generation apparatus may include two or more compressor units, each compressor unit being configured to operate with a cooling unit, a filter unit, two heat exchange apparatuses, and a gas separator.

The gas generation apparatus may include two or more heat exchange apparatuses. Each heat exchange apparatus being configured to supply compressed atmospheric air to a filter unit, and compressed atmospheric air to a gas separator.

The gas generation apparatus may be a gas processing apparatus.

Embodiments of the second aspect of the present invention may include one or more features of the first aspect of the present invention or its embodiments. Similarly, embodiments of the first aspect of the present invention may include one or more features of the second aspect of the present invention or its embodiments.

According to a third aspect of the present invention, there is provided a method of exchanging heat between two fluids comprising the steps of:
providing a heat exchange apparatus comprising:
   a body portion having:
   a first fluid inlet
   a first fluid outlet;
   a second fluid inlet;
   a second fluid outlet;
   a first fluid conduit arranged between the first fluid inlet and the first fluid outlet; and
   a second fluid conduit arranged between the second fluid inlet and the second fluid outlet,
wherein the first fluid conduit and the second fluid conduit are arranged to allow heat to be exchanged between each conduit;
supplying a fluid to the first fluid inlet, such that the fluid passes through the first fluid conduit to the first fluid outlet; and
supplying a fluid to the second fluid inlet, such that the fluid passes through the second fluid conduit to the second fluid outlet.

The fluid supplied to the first and second fluid conduits may be the same fluid.

Embodiments of the third aspect of the present invention may include one or more features of the first or second aspects of the present invention or their embodiments. Similarly, embodiments of the first or second aspects of the present invention may include one or more features of the third aspect of the present invention or its embodiments.

According to a fourth aspect of the present invention there is provided a method of generating gas comprising the steps of:
providing a gas generation apparatus comprising:
   an air intake unit;
   a compressor unit, the compressor unit being operable to draw atmospheric air through the air intake unit and into the compressor unit;
   a cooling unit, the cooling unit being configured to cool the compressed atmospheric air from the compressor unit;
   a filter unit, the filter unit being configured to filter the compressed atmospheric air from the cooling unit;
   a gas separator, the gas separator being configured to separate the compressed atmospheric air from the filter unit;
   a separated gas outlet, the separated gas outlet being configured to receive the separated compressed gas from the gas separator; and
   a heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit, and
      wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator,
operating the compressor unit to draw atmospheric air through the air intake unit into the compressor unit;
cooling the compressed atmospheric air with heat exchange apparatus;
cooling the compressed atmospheric air with the cooling unit;
filtering the compressed atmospheric air from the cooling unit with the filter unit;
heating the filtered compressed atmospheric air from the filter unit with the heat exchange apparatus;
separating the compressed atmospheric air from the heat exchange apparatus with the gas separator; and
providing the separated compressed gas from the gas separator to the separated gas outlet.

The heat exchange apparatus may be located between the compressor unit and the cooling unit, and the filter unit and the gas separator.

The heat exchange apparatus may be configured such that compressed atmospheric air from the compressor unit may pass through the first fluid conduit of the body portion. The heat exchange apparatus may be configured such that compressed atmospheric air from the compressor unit may pass through the first fluid conduit of the body portion via the first fluid inlet and first fluid outlet.

The heat exchange apparatus may be configured such that compressed atmospheric air from the filter unit may pass through the second fluid conduit of the body portion. The heat exchange apparatus may be configured such that compressed atmospheric air from the filter unit may pass through the second fluid conduit of the body portion via the second fluid inlet and the second fluid outlet.

The heat exchange apparatus may be configured such that compressed atmospheric air from the compressor unit may pass through the first fluid conduit of the body portion, and compressed atmospheric air from the filter unit may pass through the second fluid conduit of the body portion. The heat exchange apparatus may be configured such that compressed atmospheric air from the compressor unit may pass through the first fluid conduit of the body portion via the first fluid inlet and first fluid outlet, and compressed atmospheric air from the filter unit may pass through the second fluid conduit of the body portion via the second fluid inlet and second fluid outlet.

The heat exchange apparatus may be configured such that the compressed atmospheric air from the compressor unit is cooled by the heat exchange apparatus by between approximately 5°C and 15°C

The heat exchange apparatus may be configured such that the filtered compressed atmospheric air from the filter unit is heated by the heat exchange apparatus by between approximately 5°C and 15°C.

The apparatus may further comprise a gas storage tank. The gas storage tank may be configured to receive and store the separated compressed gas from the gas separator.

The gas storage tank may be connectable to the separated gas outlet (output circuit).

The gas generation apparatus may be a gas processing apparatus.

Embodiments of the fourth aspect of the present invention may include one or more features of the first, second or third aspects of the present invention or their embodiments. Similarly, embodiments of the first, second or third aspects of the present invention may include one or more features of the fourth aspect of the present invention or its embodiments.

According to a fifth aspect of the present invention there is provided a heat exchange apparatus comprising:
a body portion having:
   a first fluid inlet
   a first fluid outlet;
   a second fluid inlet;
   a second fluid outlet;
   a first fluid conduit arranged between the first fluid inlet and the first fluid outlet; and
   a second fluid conduit arranged between the second fluid inlet and the second fluid outlet,
wherein the first fluid conduit and the second fluid conduit are arranged to allow heat to be exchanged therebetween.

Embodiments of the fifth aspect of the present invention may include one or more features of the first, second, third or fourth aspects of the present invention or their embodiments. Similarly, embodiments of the first, second, third or fourth aspects of the present invention may include one or more features of the fifth aspect of the present invention or its embodiments.

According to a sixth aspect of the present invention there is provided a gas generation apparatus comprising:
an air intake unit;
a first compressor unit, the first compressor unit being operable to draw atmospheric air through the air intake unit and into the first compressor unit;
a second compressor unit, the second compressor unit being operable to draw atmospheric air through the air intake unit and into the second compressor unit;
a cooling unit, the cooling unit being configured to cool the compressed atmospheric air from the first and second compressor units;
a filter unit, the filter unit being configured to filter the compressed atmospheric air from the cooling unit;
a gas separator, the gas separator being configured to separate the compressed atmospheric air from the filter unit;
a separated gas outlet, the separated gas outlet being configured to receive the separated compressed gas from the gas separator;
a first heat exchange apparatus comprising:
   a body portion having:
      a first fluid inlet
      a first fluid outlet;
      a second fluid inlet;
      a second fluid outlet;
      a first fluid conduit arranged between the first fluid inlet and the first fluid outlet; and
      a second fluid conduit arranged between the second fluid inlet and the second fluid outlet,
   wherein the first fluid conduit and the second fluid conduit are arranged to allow heat to be exchanged between each conduit, and
   wherein the first heat exchange apparatus is arranged to receive compressed atmospheric air from the first compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator; and
a second heat exchange apparatus comprising:
   a body portion having:
      a first fluid inlet
      a first fluid outlet;
      a second fluid inlet;
      a second fluid outlet;
      a first fluid conduit arranged between the first fluid inlet and the first fluid outlet; and
      a second fluid conduit arranged between the second fluid inlet and the second fluid outlet,
   wherein the first fluid conduit and the second fluid conduit are arranged to allow heat to be exchanged between each conduit, and
   wherein the second heat exchange apparatus is arranged to receive compressed atmospheric air from the second compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator.

The first heat exchange apparatus may be arranged to receive compressed atmospheric air from the first compressor unit at the first fluid inlet and supply cooled compressed atmospheric air from the first fluid outlet to the cooling unit, and receive filtered compressed atmospheric air from the filter unit at the second fluid inlet and supply heated filtered compressed atmospheric air from the second fluid outlet to the gas separator.

The second heat exchange apparatus may be arranged to receive compressed atmospheric air from the second compressor unit at the first fluid inlet and supply cooled compressed atmospheric air from the first fluid outlet to the cooling unit, and receive filtered compressed atmospheric air from the filter unit at the second fluid inlet and supply heated filtered compressed atmospheric air from the second fluid outlet to the gas separator.

The first heat exchange apparatus may be located between the first compressor unit and the cooling unit, and the filter unit and the gas separator.

The second heat exchange apparatus may be located between the second compressor unit and the cooling unit, and the filter unit and the gas separator.

The gas generation apparatus may be a gas processing apparatus.

Embodiments of the sixth aspect of the present invention may include one or more features of the first, second, third, fourth, or fifth aspects of the present invention or their embodiments. Similarly, embodiments of the first, second, third, fourth, or fifth aspects of the present invention may include one or more features of the sixth aspect of the present invention or its embodiments.

According to a seventh aspect of the present invention there is provided a method of generating gas comprising the steps of:
providing a gas generation apparatus comprising:
   an air intake unit;
   a first compressor unit, the first compressor unit being operable to draw atmospheric air through the air intake unit and into the first compressor unit;
   a second compressor unit, the second compressor unit being operable to draw atmospheric air through the air intake unit and into the second compressor unit;
   a cooling unit, the cooling unit being configured to cool the compressed atmospheric air from the first and second compressor units;
   a filter unit, the filter unit being configured to filter the compressed atmospheric air from the cooling unit;
   a gas separator, the gas separator being configured to separate the compressed atmospheric air from the filter unit;
   a separated gas outlet, the separated gas outlet being configured to receive the separated compressed gas from the gas separator;
   a first heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit, and
      wherein the first heat exchange apparatus is arranged to receive compressed atmospheric air from the first compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator; and
   a second heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit, and
      wherein the second heat exchange apparatus is arranged to receive compressed atmospheric air from the second compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator,
operating the first and second compressor units to draw atmospheric air through the air intake unit into the compressor units;
cooling the compressed atmospheric air with the first and second heat exchange apparatuses;
cooling the compressed atmospheric air with the cooling unit;
filtering the compressed atmospheric air from the cooling unit with the filter unit;
heating the filtered compressed atmospheric air from the filter unit with the first and second heat exchange apparatuses;
separating the compressed atmospheric air from the first and second heat exchange apparatuses with the gas separator; and
providing the separated compressed gas from the gas separator to the separated gas outlet.

The first heat exchange apparatus may be located between the first compressor unit and the cooling unit, and the filter unit and the gas separator.

The second heat exchange apparatus may be located between the second compressor unit and the cooling unit, and the filter unit and the gas separator.

The gas generation apparatus may be a gas processing apparatus.

Embodiments of the seventh aspect of the present invention may include one or more features of the first, second, third, fourth, fifth, or sixth aspects of the present invention or their embodiments. Similarly, embodiments of the first, second, third, fourth, fifth, or sixth aspects of the present invention may include one or more features of the seventh aspect of the present invention or its embodiments.

According to an eighth aspect of the present invention there is provided a gas processing apparatus comprising:
an air intake unit;
a compressor unit, the compressor unit being operable to draw atmospheric air through the air intake unit and into the compressor unit;
a cooling unit, the cooling unit being configured to cool the compressed atmospheric air from the compressor unit;
a filter unit, the filter unit being configured to filter the compressed atmospheric air from the cooling unit;
a heat exchange apparatus comprising:
   a body portion having:
      a first fluid inlet
      a first fluid outlet;
      a second fluid inlet;
      a second fluid outlet;
      a first fluid conduit arranged between the first fluid inlet and the first fluid outlet; and
      a second fluid conduit arranged between the second fluid inlet and the second fluid outlet,
   wherein the first fluid conduit and the second fluid conduit are arranged to allow heat to be exchanged between each conduit; and
a filtered compressed atmospheric air outlet, the filtered compressed atmospheric air outlet being configured to receive the compressed filtered atmospheric air from the heat exchange apparatus, wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet.

The heat exchange apparatus may be arranged to receive compressed atmospheric air from the compressor unit at the first fluid inlet and supply cooled compressed atmospheric air from the first fluid outlet to the cooling unit, and receive filtered compressed atmospheric air from the filter unit at the second fluid inlet and supply heated filtered compressed atmospheric air from the second fluid outlet to the filtered compressed atmospheric air outlet.

The heat exchange apparatus may be located between the compressor unit and the cooling unit, and the filter unit and the filtered compressed atmospheric air outlet.

The heat exchange apparatus may be configured such that compressed atmospheric air from the compressor unit may pass through the first fluid conduit of the body portion. The heat exchange apparatus may be configured such that compressed atmospheric air from the compressor unit may pass through the first fluid conduit of the body portion via the first fluid inlet and first fluid outlet.

The heat exchange apparatus may be configured such that compressed atmospheric air from the filter unit may pass through the second fluid conduit of the body portion. The heat exchange apparatus may be configured such that compressed atmospheric air from the filter unit may pass through the second fluid conduit of the body portion via the second fluid inlet and the second fluid outlet.

The heat exchange apparatus may be configured such that compressed atmospheric air from the compressor unit may pass through the first fluid conduit of the body portion, and compressed atmospheric air from the filter unit may pass through the second fluid conduit of the body portion. The heat exchange apparatus may be configured such that compressed atmospheric air from the compressor unit may pass through the first fluid conduit of the body portion via the first fluid inlet and first fluid outlet, and compressed atmospheric air from the filter unit may pass through the second fluid conduit of the body portion via the second fluid inlet and second fluid outlet.

The filter unit may be a fluid filter unit. The filter unit may be a vapour filter unit. The filter unit may be a fluid and vapour filter unit. The filter unit may be a fluid, vapour and particulate filter unit. The filter unit may be configured to remove fluid, vapour or particulates from the compressed atmospheric air from the compressor unit. The filter unit may be configured to remove moisture, coarse particulates and fine particulates from the compressed atmospheric air from the compressor unit.

The filter unit may include two or more filter components. Each filter component may include a predetermined filter characteristic. The filter unit may include three filter components. Each filter component may include a predetermined filter characteristic. The filter unit may include a plurality of filter components. Each filter component may include a predetermined filter characteristic.

The filter unit may include a first filter component. The filter component may be configured to filter fluid from the compressed atmospheric air. The filter component may be configured to filter fluid, vapour and particulates from the compressed atmospheric air. The filter unit component may be configured to filter fluid in the form of liquid and/or vapour from the compressed atmospheric air.

The filter unit may include a second filter component. The second filter component may be configured to filter coarse particulates from the compressed atmospheric air. The coarse particulates may be mist or vapour.

The filter unit may include a third filter component. The third filter component may be configured to filter fine particulates from the compressed atmospheric air. Fine particulates may be any material or substance larger than 0.1 Micron.

The gas processing apparatus may further comprise a gas separator. The gas separator may be configured to separate the compressed atmospheric air from the filter unit.

The gas separator may be located between the heat exchange apparatus and the filtered compressed atmospheric air outlet. In this arrangement the heat exchange apparatus is arranged to supply filtered compressed atmospheric air from the second fluid outlet to the gas separator.

The gas separator may be an air filter unit.

The gas separator of the gas generation apparatus may be configured to filter, or separate, the compressed atmospheric air from the filter unit into at least one of its constituent gas components. That is, the gas separator of the gas processing apparatus may be configured to filter, or separate, out substantially all but one of the gas components of the atmospheric air. The gas separator of the gas processing apparatus may therefore be operable to selectively filter, or separate, out four out of the five main gases present in atmospheric air. The remaining gas present after passing the compressed atmospheric air through the gas separator of the gas processing apparatus may therefore be nitrogen, oxygen, argon or carbon dioxide.

The gas separator of the gas processing apparatus may be a membrane filter. The gas separator of the gas processing apparatus may be a molecular sieve filter. The gas separator of the gas processing apparatus may be a carbon molecular sieve filter. The gas separator of the gas generation processing may be a mol sieve filter. The gas separator of the gas processing apparatus may be a dryer membrane filter. The gas separator of the gas processing apparatus may be a hollow fibre membrane filter. The gas separator of the gas processing apparatus may be a catalytic reactor. The gas separator may be a hydrocarbon molecular sieve. The gas separator may be a membrane. The gas separator may be a pressure swing adsorption (PSA) apparatus. The gas separator may be a vacuum pressure swing adsorption (VPSA) apparatus. The gas separator may be a catalytic reaction apparatus. The gas separator may be a thermal swing adsorption (TSA) apparatus. The gas separator may be an electrolysis apparatus. The gas separator may be a fractional distillation apparatus. The gas separator may be a chemical reaction apparatus.

The gas processing apparatus may further comprise a gas storage tank. The gas storage tank may be configured to receive and store the compressed gas from the heat exchange apparatus. The gas storage tank may be configured to receive and store the separated compressed gas from the gas separator.

The gas storage tank may be connectable to the filtered compressed atmospheric air outlet (output circuit). The gas storage tank may be connectable to the separated gas outlet (output circuit).

The gas processing apparatus may comprise two or more compressor units. Each compressor unit may draw atmospheric air through the air intake unit. Alternatively, the gas processing apparatus may include two or more air intake units, and each compressor may operate with its own air intake unit. In this arrangement, each compressor unit includes its own filter unit, and heat exchange apparatus. Alternatively, each compressor unit includes only its own heat exchange apparatus, and the output from each compressor unit is fed to the filter unit. The output from the filter unit may be provided to each heat exchange apparatus, and the output from each heat exchange apparatus may be provided to the filtered compressed atmospheric air outlet.

The gas processing apparatus may include two or more compressor units, each compressor unit being configured to operate with a cooling unit, a filter unit, and a heat exchange apparatus. The gas processing apparatus may include two or more compressor units, each compressor unit being configured to operate with a cooling unit, a filter unit, two heat exchange apparatuses, and a filtered compressed atmospheric air outlet.

The gas processing apparatus may include two or more heat exchange apparatuses. Each heat exchange apparatus being configured to supply compressed atmospheric air to a filter unit, and compressed atmospheric air to a filtered compressed atmospheric air outlet.

The gas processing apparatus may be a gas generation apparatus.

Embodiments of the eighth aspect of the present invention may include one or more features of the first, second, third, fourth, fifth, sixth, or seventh aspects of the present invention or their embodiments. Similarly, embodiments of the first, second, third, fourth, fifth, sixth, or seventh aspects of the present invention may include one or more features of the eighth aspect of the present invention or its embodiments.

According to a ninth aspect of the present invention there is provided a method of processing gas comprising the steps of:
providing a gas processing apparatus comprising:
   an air intake unit;
   a compressor unit, the compressor unit being operable to draw atmospheric air through the air intake unit and into the compressor unit;
   a cooling unit, the cooling unit being configured to cool the compressed atmospheric air from the compressor unit;
   a filter unit, the filter unit being configured to filter the compressed atmospheric air from the cooling unit;
   a heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit, and
   a filtered compressed atmospheric air outlet, the filtered compressed atmospheric air outlet being configured to receive the filtered compressed atmospheric air from the heat exchange apparatus;
      wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet; and
operating the compressor unit to draw atmospheric air through the air intake unit into the compressor unit;
cooling the compressed atmospheric air with the heat exchange apparatus;
cooling the compressed atmospheric air with the cooling unit;
filtering the compressed atmospheric air from the cooling unit with the filter unit;
heating the filtered compressed atmospheric air from the filter unit with the heat exchange apparatus; and
providing the filtered compressed atmospheric air from the heat exchange apparatus to the filtered compressed atmospheric air outlet.

The heat exchange apparatus may be configured such that the compressed atmospheric air from the compressor unit is cooled by the heat exchange apparatus by between approximately 5°C and 15°C

The heat exchange apparatus may be configured such that the filtered compressed atmospheric air from the filter unit is heated by the heat exchange apparatus by between approximately 5°C and 15°C.

The gas processing apparatus may further comprise a gas separator. The gas separator may be configured to separate the compressed atmospheric air from the filter unit.

The gas separator may be located between the heat exchange apparatus and the filtered compressed atmospheric air outlet. In this arrangement the heat exchange apparatus is arranged to supply filtered compressed atmospheric air from the second fluid outlet to the gas separator.

The method may comprise the further step of separating the compressed atmospheric air from the heat exchange apparatus with the gas separator.

The gas processing apparatus may be a gas generation apparatus.

Embodiments of the ninth aspect of the present invention may include one or more features of the first, second, third, fourth, fifth, sixth, seventh, or eighth aspects of the present invention or their embodiments. Similarly, embodiments of the first, second, third, fourth, fifth, sixth, seventh, or eighth aspects of the present invention may include one or more features of the ninth aspect of the present invention or its embodiments.

According to a tenth aspect of the present invention there is provided a gas processing apparatus comprising:
an air intake unit;
a first compressor unit, the first compressor unit being operable to draw atmospheric air through the air intake unit and into the first compressor unit;
a second compressor unit, the second compressor unit being operable to draw atmospheric air through the air intake unit and into the second compressor unit;
a cooling unit, the cooling unit being configured to cool the compressed atmospheric air from the first and second compressor units;
a filter unit, the filter unit being configured to filter the compressed atmospheric air from the cooling unit;
a first heat exchange apparatus comprising:
   a body portion having:
      a first fluid inlet
      a first fluid outlet;
      a second fluid inlet;
      a second fluid outlet;
      a first fluid conduit arranged between the first fluid inlet and the first fluid outlet; and
      a second fluid conduit arranged between the second fluid inlet and the second fluid outlet,
      wherein the first fluid conduit and the second fluid conduit are arranged to allow heat to be exchanged between each conduit;
   a second heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit;
   a filtered compressed atmospheric air outlet, the filtered compressed atmospheric air outlet being configured to receive the compressed filtered atmospheric air from first and second heat exchange apparatuses,
   wherein the first heat exchange apparatus is arranged to receive compressed atmospheric air from the first compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet, and
   wherein the second heat exchange apparatus is arranged to receive compressed atmospheric air from the second compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet.

The gas processing apparatus may be a gas generation apparatus.

Embodiments of the tenth aspect of the present invention may include one or more features of the first, second, third, fourth, fifth, sixth, seventh, eighth, or ninth aspects of the present invention or their embodiments. Similarly, embodiments of the first, second, third, fourth, fifth, sixth, seventh, eighth, or ninth aspects of the present invention may include one or more features of the tenth aspect of the present invention or its embodiments.

According to an eleventh aspect of the present invention there is provided a method of processing gas comprising the steps of:
providing a gas processing apparatus comprising:
   an air intake unit;
   a first compressor unit, the first compressor unit being operable to draw atmospheric air through the air intake unit and into the first compressor unit;
   a second compressor unit, the second compressor unit being operable to draw atmospheric air through the air intake unit and into the second compressor unit;
   a cooling unit, the cooling unit being configured to cool the compressed atmospheric air from the first and second compressor units;
   a filter unit, the filter unit being configured to filter the compressed atmospheric air from the cooling unit;
   a first heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit;
   a second heat exchange apparatus comprising:
      a body portion having:
         a first fluid inlet
         a first fluid outlet;
         a second fluid inlet;
         a second fluid outlet;
         a first fluid conduit arranged between the first fluid inlet and the first fluid outlet; and
         a second fluid conduit arranged between the second fluid inlet and the second fluid outlet,
      wherein the first fluid conduit and the second fluid conduit are arranged to allow heat to be exchanged between each conduit;
   a filtered compressed atmospheric air outlet, the filtered compressed atmospheric air outlet being configured to receive the compressed filtered atmospheric air from first and second heat exchange apparatuses,
wherein the first heat exchange apparatus is arranged to receive compressed atmospheric air from the first compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet, and
wherein the second heat exchange apparatus is arranged to receive compressed atmospheric air from the second compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the filtered compressed atmospheric air outlet;
operating the first and second compressor units to draw atmospheric air through the air intake unit into the compressor units;
cooling the compressed atmospheric air with the heat exchange apparatuses;
cooling the compressed atmospheric air with the cooling unit;
filtering the compressed atmospheric air from the cooling unit with the filter unit;
heating the filtered compressed atmospheric air from the filter unit with the heat exchange apparatuses; and
providing the filtered compressed atmospheric air from the heat exchange apparatuses to the filtered compressed atmospheric air outlet.

The heat exchange apparatuses may be configured such that the compressed atmospheric air from the compressor units is cooled by the heat exchange apparatuses by between approximately 5°C and 15°C

The heat exchange apparatuses may be configured such that the filtered compressed atmospheric air from the filter unit is heated by the heat exchange apparatuses by between approximately 5°C and 15°C.

The gas processing apparatus may further comprise a gas separator. The gas separator may be configured to separate the compressed atmospheric air from the filter unit.

The gas separator may be located between the heat exchange apparatuses and the filtered compressed atmospheric air outlet. In this arrangement the heat exchange apparatuses are arranged to supply filtered compressed atmospheric air from the second fluid outlet to the gas separator.

The method may comprise the further step of separating the compressed atmospheric air from the heat exchange apparatuses with the gas separator.

The gas processing apparatus may be a gas generation apparatus.

Embodiments of the eleventh aspect of the present invention may include one or more features of the first, second, third, fourth, fifth, sixth, seventh, eighth, ninth, or tenth aspects of the present invention or their embodiments. Similarly, embodiments of the first, second, third, fourth, fifth, sixth, seventh, eighth, ninth, or tenth aspects of the present invention may include one or more features of the eleventh aspect of the present invention or its embodiments.

### Brief description of the drawings

Embodiments of the invention will now be described, by way of example, with reference to the drawings, in which:
Fig. 1 is a schematic view of an example gas generation apparatus;
Fig. 2a is a perspective view of heat exchange apparatus according to the present invention;
Fig. 2b is a cross sectional side view of the heat exchange apparatus of Fig. 2a;
Fig. 3 is a schematic view of a gas generation apparatus/gas processing apparatus in accordance with the present invention including the heat exchange apparatus of Figs. 2a and 2b; and
Fig. 4 is a schematic view of an alternative gas generation apparatus/gas processing apparatus in accordance with the present invention including the heat exchange apparatus of Figs. 2a and 2b.

### Description of preferred embodiments

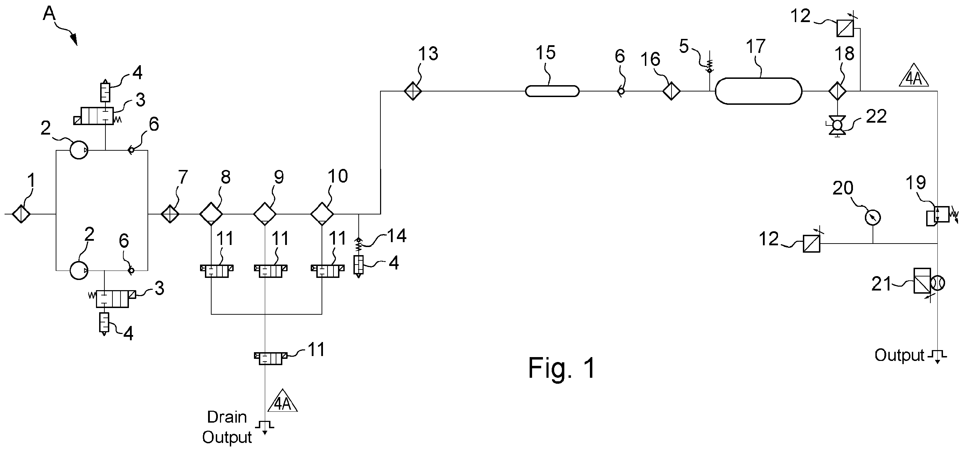

Fig. 1 is a schematic example of a known gas generation apparatus. In the example illustrated here, the apparatus generates nitrogen gas from atmospheric air, and includes two compressor units. However, other gas generation apparatuses are known to generate other gases, or gas mixtures, and may include single compressors, or more than two compressors.

The operation of such gas generation apparatuses is well understood and no detailed explanation of the operation of the apparatuses will be provided here.

The gas generation apparatus A of Fig. 1 includes the following components:

| | |
|---|---|
| 1. Inlet filter | 12. Pressure transducer |
| 2. Compressor | 13. Re-heat coil |
| 3. Compressor offload valve | 14. Back pressure relief valve |
| 4. Silencer | 15. Nitrogen membrane |
| 5. Safety relief valve | 16. Hydrocarbon tower filter |
| 6. Non-return valve | 17. Nitrogen storage tank |
| 7. Fin tube cooler | 18. Fine particulate filter |
| 8. Water separator | 19. Output pressure regulator |
| 9. Coarse particulate filter | 20. Output pressure gauge |
| 10. Fine particulate filter | 21. Flow transducer |
| 11. Drain valve | 22. Manual ball valve |

As is known with such gas generation apparatuses, the purity of the gas generated by the apparatus is dependent on the pressure, temperature and density of the compressed air that is separated. If the pressure of the compressed air supplied to the filter 15 (nitrogen membrane) drops, then the flow rate of the compressed air through the gas filter is reduced, which affects the purity of the generated gas. Furthermore, the compressors 2 are required to operate to continuously maintain a desired operating pressure of gas within the generator A. Also, it is necessary to drain extracted water, or moisture, from the triplex filter 8, 9 and 10. This is carried out through operation of drain valves 11. If the water is not drained from the filters 8, 9, 10, then severe damage may occur to components of the apparatus A, notably the nitrogen membrane filter 15. It is also possible that the gas generated by the apparatus could contain an unacceptable level of water, or water vapour, which could damage further apparatuses to which the gas is supplied.

Water and/or water vapour in known gas generation apparatuses may be created as the compressed atmospheric air cools between the compressor unit and the nitrogen membrane. Also, as the compressed air cools, it becomes denser, which affects the efficiency of the membrane 15.

Pressure drop and flow rate in known gas generation apparatuses may be affected by complex flow paths and changing diameters of pipework within the generator. Such arrangements introduce significant pressure drops within the generator A, which means that the compressors 2 have to work harder to maintain the desired operating pressure. This reduces the life expectancy of the compressors 2.

As stated above, the inventors of the present invention have appreciated the shortcomings with such known gas generation apparatus A.

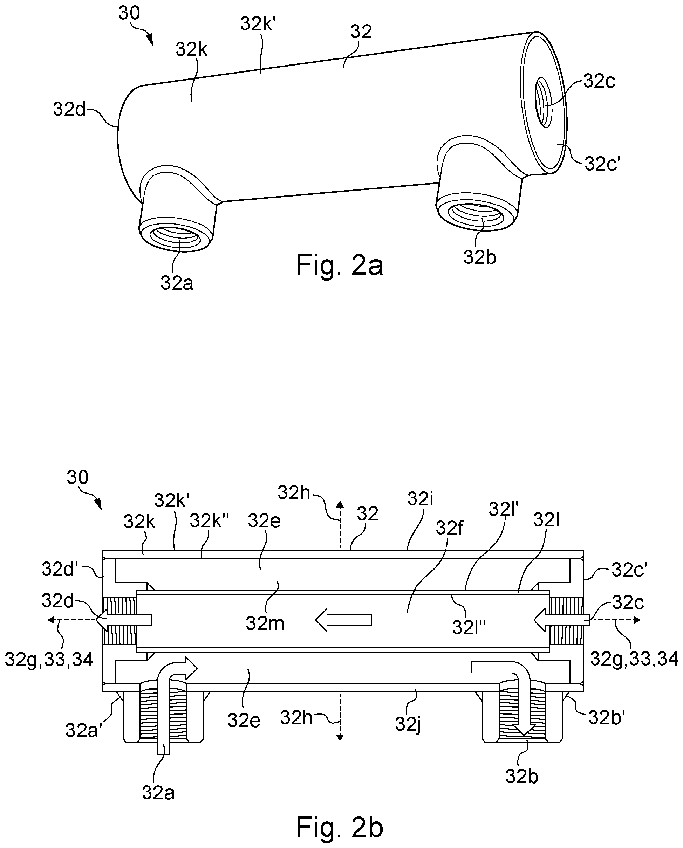

With reference to Figs. 2a and 2b, a heat exchange apparatus 30 is illustrated. As described further below, the heat exchange apparatus 30 may be used as part of gas generation apparatuses/gas processing apparatuses A' and B' of the present invention.

The heat exchange apparatus 30 includes a body portion 32 having a first fluid inlet 32a, a first fluid outlet 32b, a second fluid inlet 32c, and a second fluid outlet 32d.

As described further below, a first fluid conduit 32e is arranged between the first fluid inlet 32a and the first fluid outlet 32b, and a second fluid conduit 32f is arranged between the second fluid inlet 32c and the second fluid outlet 32d. The first and second fluid conduits 32e, 32f are arranged to allow heat to be transferred between each conduit 32e, 32f.

In use, the heat exchange apparatus 30 is arranged to transfer fluid from the first fluid inlet 32a to the first fluid outlet 32b via the first fluid conduit 32e, and transfer fluid from the second fluid inlet 32c to the second fluid outlet 32d via the second fluid conduit 32f.

The heat exchange apparatus 30 is configured to operate within a gas generation apparatus A', B' to cool compressed atmospheric air being supplied to the cooling unit 17, and heat filtered compressed atmospheric air being supplied to the nitrogen membrane 115 (an example of a gas separator), as described further below. It should also be appreciated that the heat exchange apparatus 30 may be configured to process gas to cool compressed atmospheric air being supplied to the cooling unit 17, and heat filtered compressed atmospheric air being supplied to the output 121a (an example of a filtered compressed atmospheric air outlet), as described further below. That is, it is not essential that the apparatus incudes the nitrogen membrane 115, and the apparatus may process the atmospheric air from the compressors, the filter unit and the heat exchange apparatus to produce filtered compressed atmospheric air. In this arrangement, the filtered compressed atmospheric air will have a reduced water/vapour content and a reduced density, as described further below. In this arrangement this is an example of a gas processing apparatus, in accordance with the present invention.

It will be appreciated that in the embodiment illustrated and described here, that the term "fluid" includes gas, and compressed atmospheric gas, as is understood in relation to gas generation, gas generators and gas processing apparatuses.

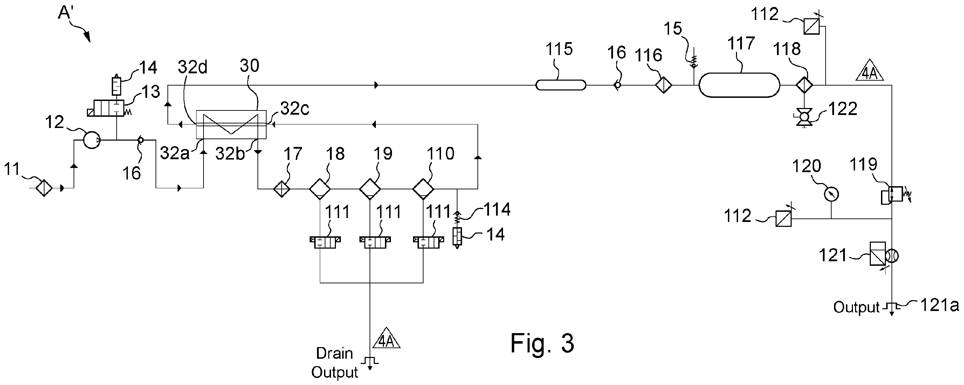

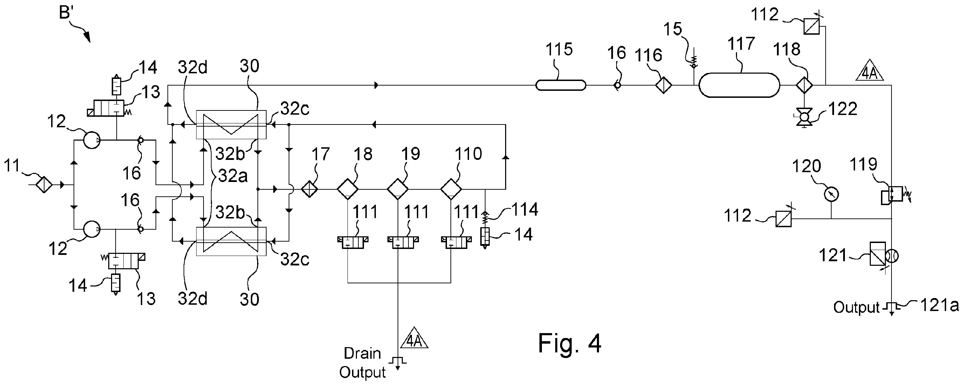

The difference between the gas generator A' of Fig. 3 and the gas generator B' of Fig. 4 is that the gas generator B' of Fig. 4 includes two compressor units 12. Each compressor unit 12 of the gas generator B' operates with its own heat exchange apparatus 30, as described further below. All other components, and the operation thereof, are identical between each gas generator A' and B'. The same reference numbers between identical components have been used for consistency.

As illustrated in Fig. 3, the heat exchange apparatus 30 is positioned in the gas generation apparatus A' to receive compressed atmospheric air from the compressor units 12 and supply the same to the cooling unit 17. The heat exchange apparatus 30 is also positioned in the gas generation apparatus A' to receive filtered compressed atmospheric air from the filter components 18, 19, 110 (an example of a filter unit) and supply the same to the nitrogen membrane 115.

In the embodiment illustrated and described here, the first fluid inlet 32a is located towards an end portion 32a' of the body portion 32, and the first fluid outlet 32b is located towards an opposite end portion 32b' of the body portion 32. The first fluid inlet and outlet 32a, 32b are located on the same side of the body portion 32. However, it should be appreciated that other arrangements are possible.

The second fluid inlet 32c is located on a side portion 32c' of the body portion 32, and the second fluid outlet 32d is located on an opposite side portion 32d' of the body portion 32. However, again it should be appreciated that other arrangements are possible.

The body portion 32 may include a longitudinal axis 32g, extending between the side portions 32c' and 32d' of the body portion 32. The body portion may include a lateral axis 32h extending between a top side 32i and a bottom side 32j of the body portion 32.

The first fluid inlet 32a and first fluid outlet 32b are arranged to be substantially parallel to the lateral axis 32h of the body portion 32, and the second fluid inlet 32b and second fluid outlet 32c are arranged to be substantially parallel to the longitudinal axis 32g of the body portion 32.

As best illustrated in Figs. 2a and 2b, the body portion 32 of the heat exchange apparatus 30 is generally cylindrical in shape. The body portion 32 includes a first member 32k and a second member 321.

The first member 32k is a hollow cylinder with an outer wall portion 32k' and an inner wall portion 32k", and the second member 32l is a hollow cylinder with an outer wall portion 32l' and an inner wall portion 32l". The first and second members 32k, 32l are similar in length, but the diameter of the first member 32k is greater than the diameter of the second member 32l.

As illustrated in Fig. 2b, the first member 32k houses the second member 32l. That is, the second member 32l is positioned within the first member 32k. Side portions 32c' and 32d' are used to support the second member 32l in position within the first member 32k. The first and second members 32k, 32l are arranged such that their longitudinal axes 33, 34 are collinear.

In this arrangement, the second member 32l is spaced from the first member 32k. That is, the outer wall portion 32l' of the second member 32l is spaced from the inner wall portion 32k" of the first member 32k. This arrangement provides for an annular cylindrical void, or volume, 32m between the first member 32k and the second member 32l.

The annular cylindrical void, or volume, 32m defines the first fluid conduit 32e of the body portion. The first fluid conduit 32e is therefore an annular cylinder shaped volume that surrounds the second member 32l and links the first fluid inlet 32a with the first fluid outlet 32b. The first fluid inlet 32a and the first fluid outlet 32b are therefore in fluidic communication with the first fluid conduit 32e to allow fluid entering the body portion 32 at the first fluid inlet 32a to flow through the first fluid conduit 32e and exit at the first fluid outlet 32b.

The second member 32l of body portion 32 defines the second fluid conduit 32f. The second fluid conduit 32f is therefore a cylinder shaped volume which links the second fluid inlet 32c with the second fluid outlet 32d. The second fluid inlet 32c and the second fluid outlet 32d are therefore in fluidic communication with the second fluid conduit 32f to allow fluid entering the body portion 32 at the second fluid inlet 32c to flow through the second fluid conduit 32f and exit at the second fluid outlet 32d.

It will be appreciated in the arrangement illustrated and described above that the flow paths of fluid in the first and second conduits 32e, 32f are in opposite directions.

The fluid inlets 32a, 32c and fluid outlets 32b, 32d may include fittings. The fittings may be 1/4" BSPP (British Standard Pipe Parallel) fittings. However, it should be appreciated that other fittings may be used.

In the embodiment illustrated and described here, the first fluid conduit 32e may have a volume of between 60ml and 70ml, and the second fluid conduit 32f may have a volume of between 10ml and 20ml. However, it should be appreciated that other suitable sizes and volumes may be used.

As described further below, the heat exchange apparatus 30 may be used to allow heat to be transferred between fluids flowing in each fluid conduit 32e, 32f.

With reference to Fig. 3, in use, the heat exchange apparatus 30 is arranged to receive compressed atmospheric air from the compressor units 12 at the first fluid inlet 32a, pass the air through the first fluid conduit 32e, and supply the air to the cooling unit 17 from the first fluid outlet 32b. The heat exchange apparatus 30 is also arranged to receive filtered compressed atmospheric air from the triplex filter unit 18, 19, 110 at the second fluid inlet 32c, pass the air through the second fluid conduit 32f, and supply the air to the nitrogen membrane 115 from the second fluid outlet 32d.

The operation of a gas generation apparatus A' of the present invention will now be described with reference to Fig. 3.

Prior to starting the compressors 12 to generate gas, the compressor offload valves 13 and the drain valves 111 are opened to release any downstream pressure of the compressors 12 and drain any water from the apparatus A'. The offload valves 13 and the drain valves 111 are then closed.

Compressed air from the inlet filter 11 (an example of an air intake unit) is compressed by the compressors 12 and then passed to the heat exchanger 30 before entering the fin tube cooler 17 (an example of a cooling unit) before entering the triplex filter unit 18, 19 and 110 (an example of a filter unit).

The triplex filter unit 18, 19 and 110 is configured to remove water and/or water vapour from the compressed atmospheric air. This type of filter may be termed an 'air dryer'.

As the compressed atmospheric air is passed through each filter 18, 19, and 110, filtered water, or condensed water vapour, is fed by gravity into drain valves 111.

The output from the triplex filter unit 18, 19, 110 is compressed atmospheric air with a reduced water, or water vapour, content. This compressed atmospheric air is then fed back to the heat exchange apparatus 30 before being passed to the nitrogen membrane 115.

The nitrogen membrane 115 is configured to filter, or separate, out all constituent atmospheric gas components from the compressed atmospheric air except nitrogen. It should be appreciated that other types of separator units of the gas generation apparatus A' may be carbon molecular sieve filters, or mol sieve filters, catalytic reactors, hydrocarbon molecular sieves, or the like.

The nitrogen membrane 115 is connectable to a gas storage tank 117, which is configured to receive and store the separated compressed nitrogen gas therein. However, it should be appreciated that gas storage tank is not essential, and instead the nitrogen gas may be supplied directly to the output 121a (an example of a separated gas outlet/ filtered compressed atmospheric air outlet).

Typically, the gas generator A' takes several minutes of continued operation after start up to generate gas at the desired pressure and have the heat exchanger operating as desired.

In a settled operating condition, the temperature of the compressed atmospheric air exiting the compressors is typically approximately 75°C. Gas at this temperature entering the heat exchanger 30 is cooled by approximately 10°C before entering the fin tube cooler 17. Reducing the temperature of the gas entering the fine tube cooler 17 increases the operating efficiency of the fin tube cooler 17. It should be appreciated that the temperature of the compressed air exiting the compressors may be higher or lower than 75°C, depending on the usage and operating environment of the apparatus.

The fin tube cooler 17 typically reduces the temperature of the gas to approximately 20°C before it enters the triplex filter unit 18, 19, 110.

Filtered compressed atmospheric air from the triplex filter unit 18, 19, 110 is fed back to the heat exchange apparatus 30 at approximately 20°C. The heat exchange apparatus 30 heats the gas by approximately 10°C to approximately 30°C before it is passed to the nitrogen membrane 115. It should be appreciated that the arrangement of the first and second fluid conduits 32e, 23f allows for heat to be transferred from the "hot" compressed atmospheric air from the compressors 12 to the "cool" filtered compressed atmospheric air from the triplex filter unit 18, 19, 110. Removing heat from the "hot" compressed atmospheric air from the compressors 12 cools this air, and transferring this heat to the "cool" filtered compressed atmospheric air from the triplex filter unit 18, 19, 110 heats this air. During operation the heat exchange apparatus 30 is continuously cooling and heating compressed atmospheric air as it passes through the generator A'. Again, it should be appreciated that the temperature of the compressed air exiting the triplex filter unit 18, 19, 110 may be higher or lower than 20°C, depending on the usage and operating environment of the apparatus.

Increasing the temperature of the filtered compressed atmospheric air by approximately 10°C changes any residual moisture coming out of the triplex filter unit 18, 19, 110 to vapour. This ensures that no bulk moisture, condensate, or water, is passed to the nitrogen membrane 115. Also, heating the filtered compressed atmospheric air lowers its density, which increases the operating efficiency of the membrane 115.

As illustrated in Fig. 3, the gas generation apparatus A' comprises a number of other components that are used to operate the system. These components are well understood in the operation of gas generation apparatuses and no further explanation of their operation will be provided here. The gas generation apparatus A' of Fig. 3 includes the following components:

| | |
|---|---|
| 11. Inlet filter | 112. Pressure transducer |
| 12. Compressor | 114. Back pressure relief valve |
| 13. Compressor offload valve | 115. Nitrogen membrane |
| 14. Silencer | 116. Hydrogen tower filter |
| 15. Safety return valve | 117. Nitrogen storage tank |
| 16. Non-return valve | 118. Fine particulate filter |
| 17. Fin tube cooler | 119. Output pressure regulator |
| 18. Water separator | 120. Output pressure gauge |
| 19. Coarse particulate filter | 121. Flow transducer |
| 110. Fine particulate filter | 121a. Output/Separated gas outlet |
| 111. Drain valve | 122. Manual ball valve |

Continued operation of the gas generation apparatus A' results in a buildup of water in each drain valve 111. The drain valves 111 are periodically actuated to open and drain the water therefrom. The back pressure relief valve 114 also operates to maintain the desired operating pressure of gas in the generator A'.

As the compressors 12 continue to operate the heat exchange apparatus 30 cools the compressed atmospheric air from the compressor units 12 before it is passed to the fin tube cooler 17, and heats the filtered compressed atmospheric air from the triplex filter unit 18, 19, 110 before it is passed to the nitrogen membrane 115.

With reference to Fig. 4, an alternative gas generation apparatus B' is illustrated.

The gas generation apparatus B' is similar to the gas generation apparatus A' of Fig. 3, the only difference being that the gas generator B' of Fig. 4 includes two compressor units 12 (an example or a first compressor unit and a second compressor unit). Each compressor unit 12 of the gas generator B' operates with its own heat exchange apparatus 30 (an example of a first heat exchange apparatus and a second heat exchange apparatus), as described further below. All other components, and the operation thereof, are identical between each gas generator A' and B'. The same reference numbers between identical components have been used for consistency.

As illustrated in Fig. 4, each heat exchange apparatus 30 is positioned in the gas generation apparatus B' to receive compressed atmospheric air from a compressor unit 12 and supply the same to the cooling unit 17. Each heat exchange apparatus 30 is also positioned in the gas generation apparatus B' to receive filtered compressed atmospheric air from the filter components 18, 19, 110 (an example of a filter unit) and supply the same to the nitrogen membrane 115.

The operation of the gas generation apparatus B' is substantially identical to the operation of the gas generation apparatus A'.

Also, it should be appreciated that the gas generation apparatus A', B' may not include the nitrogen membrane 115 (an example of a gas separator). In this arrangement the apparatus may function as a gas processing apparatus, with filtered compressed atmospheric air being supplied to the output 121a.

Providing a heat exchange apparatus 30 in accordance with the present invention allows the compressed atmospheric air from the compressors 12 to be cooled before entering the fin tube cooler 17, which increases the operating efficiency of the fin tube cooler 17.

Furthermore, feeding back the filtered compressed atmospheric air from the triplex filter unit 18, 19, 110 to the heat exchange apparatus 30 allows the air to be heated before entering the nitrogen membrane 115, which changes any residual moisture coming out of the triplex filter unit 18, 19, 110 to vapour, and ensures that no bulk moisture, or water, is passed to the nitrogen membrane 115. Also, heating the filtered compressed atmospheric air lowers its density, which increases the operating efficiency of the membrane 115.

Also, providing a heat exchange apparatus 30 as described above means that it is possible to reduce the number of components required in the gas generation apparatus. For example, as the heat exchange apparatus 30 heats the filtered compressed atmospheric air from the triplex filter unit 18, 19, 110, it is possible to remove the reheat coil 13 from the gas generation apparatus A of Fig. 1. Doing this removes the pressure drop introduced to the generator A by the reheat coil 13, which means that the compressors 12 are not running unnecessarily and are overworked, which decreases their operational lifespan.

Modifications and improvements may be made to the above without departing from the scope of the present invention.

It should be appreciated that, although the heat exchange apparatus of the present invention has been illustrated and described here in use with a gas generation apparatus, the heat exchange apparatus may be used in other systems, or arrangements. In other systems, or arrangements, it will be appreciated that the heat exchange apparatus may operate to transfer heat between each fluid conduit by allowing fluid to enter and exit each of the fluid inlets and outlets of the body portion. The heat exchange apparatus of the present invention may therefore function as a stand alone component that may be fitted, or retrofitted, to an existing system, or arrangement, where it is necessary to heat and/or cool fluid.

Furthermore, although the heat exchange apparatus 30 has been illustrated and described here with reference to a gas generation apparatus A', B' that includes a gas separator (nitrogen membrane 115), it should be appreciated that the gas separator is not essential and the heat exchange apparatus 30 may be used in a system without a gas separator. A gas generation apparatus in this arrangement without a gas separator is an example of a gas processing apparatus, where atmospheric air is processed by the compressor unit, the filter unit and the heat exchange apparatus. The gas processing apparatus produces atmospheric air which as a reduced water/vapour content and a reduced density.

## Claims

1. A gas generation apparatus comprising:
an air intake unit;
a compressor unit, the compressor unit being operable to draw atmospheric air through the air intake unit and into the compressor unit;
a cooling unit, the cooling unit being configured to cool the compressed atmospheric air from the compressor unit;
a filter unit, the filter unit being configured to filter the compressed atmospheric air from the cooling unit;
a gas separator, the gas separator being configured to separate the compressed atmospheric air from the filter unit;
a separated gas outlet, the separated gas outlet being configured to receive the separated compressed gas from the gas separator; and
a heat exchange apparatus comprising:
a body portion having:
a first fluid inlet
a first fluid outlet;
a second fluid inlet;
a second fluid outlet;
a first fluid conduit arranged between the first fluid inlet and the first fluid outlet; and
a second fluid conduit arranged between the second fluid inlet and the second fluid outlet,
wherein the first fluid conduit and the second fluid conduit are arranged to allow heat to be exchanged between each conduit, and
wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator.

2. The gas generation apparatus of claim 1, wherein the first fluid inlet of the body portion of the heat exchange apparatus is located towards an end portion of the body portion, the first fluid outlet is located towards an opposite end portion of the body portion, the second fluid inlet of the body portion of the heat exchange apparatus is located on a side portion of the body portion, and the second fluid outlet is located on an opposite side portion of the body portion.

3. The gas generation apparatus of any preceding claim, wherein the first fluid inlet and first fluid outlet of the body portion of the heat exchange apparatus are arranged to be substantially parallel to a lateral axis of the body portion.

4. The gas generation apparatus of any preceding claim, wherein the second fluid inlet and second fluid outlet of the body portion of the heat exchange apparatus are arranged to be substantially parallel to a longitudinal axis of the body portion.

5. The gas generation apparatus of any preceding claim, wherein the body portion of the heat exchange apparatus includes a first member and a second member, the first member being a hollow cylinder with an outer wall portion and an inner wall portion, and the second member being a hollow cylinder with an outer wall portion and an inner wall portion.

6. The gas generation apparatus of claim 5, wherein the diameter of the first member is greater than the diameter of the second member.

7. The gas generation apparatus of claim 5 or claim 6, wherein the second member is positioned within the first member.

8. The gas generation apparatus of claim 7, wherein the side portions of the body member of the heat exchange apparatus support the second member in position within the first member.

9. The gas generation apparatus of claim 7 or claim 8, wherein the first and second members of the body portion of the heat exchange apparatus are arranged such that their longitudinal axes are collinear.

10. The gas generation apparatus of any of claims 7 to 9, wherein the second member of the body portion of the heat exchange apparatus is spaced from the first member.

11. The gas generation apparatus of any of claims 7 to 10, wherein the outer wall portion of the second member of the body portion of the heat exchange apparatus is spaced from the inner wall portion of the first member, such that an annular cylindrical void exists between the first member and the second member.

12. The gas generation apparatus of claim 11, wherein the annular cylindrical void defines the first fluid conduit of the body portion.

13. The gas generation apparatus of claim 11 or claim 12, wherein the first fluid conduit surrounds the second member.

14. The gas generation apparatus of any of claims 7 to 13, wherein the second member of body portion defines the second fluid conduit.

15. A method of generating gas comprising the steps of:
providing a gas generation apparatus comprising:
an air intake unit;
a compressor unit, the compressor unit being operable to draw atmospheric air through the air intake unit and into the compressor unit;
a cooling unit, the cooling unit being configured to cool the compressed atmospheric air from the compressor unit;
a filter unit, the filter unit being configured to filter the compressed atmospheric air from the cooling unit;
a gas separator, the gas separator being configured to separate the compressed atmospheric air from the filter unit;
a separated gas outlet, the separated gas outlet being configured to receive the separated compressed gas from the gas separator; and
a heat exchange apparatus comprising:
a body portion having:
a first fluid inlet
a first fluid outlet;
a second fluid inlet;
a second fluid outlet;
a first fluid conduit arranged between the first fluid inlet and the first fluid outlet; and
a second fluid conduit arranged between the second fluid inlet and the second fluid outlet,
wherein the first fluid conduit and the second fluid conduit are arranged to allow heat to be exchanged between each conduit, and
wherein the heat exchange apparatus is arranged to receive compressed atmospheric air from the compressor unit at the first fluid inlet and supply compressed atmospheric air from the first fluid outlet to the cooling unit, and receive filtered compressed atmospheric air from the filter unit at the second fluid inlet and supply filtered compressed atmospheric air from the second fluid outlet to the gas separator,
operating the compressor unit to draw atmospheric air through the air intake unit into the compressor unit;
cooling the compressed atmospheric air with heat exchange apparatus;
cooling the compressed atmospheric air with the cooling unit;
filtering the compressed atmospheric air from the cooling unit with the filter unit;
heating the filtered compressed atmospheric air from the filter unit with the heat exchange apparatus;
separating the compressed atmospheric air from the heat exchange apparatus with the gas separator; and
providing the separated compressed gas from the gas separator to the separated gas outlet.
